(19) Europäisches Patentamt
European Patent Office
Office européen des brevets

(11) EP 0 778 296 A1

# (12) EUROPEAN PATENT APPLICATION

(43) Date of publication:
**11.06.1997 Bulletin 1997/24**

(51) Int Cl.[6]: **C08F 220/12**, C09D 133/06

(21) Application number: **96308608.7**

(22) Date of filing: **28.11.1996**

(84) Designated Contracting States:
**BE DE ES FR GB GR IT NL**

(30) Priority: **07.12.1995 US 8347**

(71) Applicant: **ROHM AND HAAS COMPANY**
**Philadelphia, Pennsylvania 19106-2399 (US)**

(72) Inventors:
- **Van Curen, John**
  **Doylestown, Pennsylvania 18901 (US)**
- **Winey, Donald Alfred**
  **Warminster, Pennsylvania 18974 (US)**

(74) Representative: **Buckley, Guy Julian et al**
**ROHM AND HAAS (UK) LTD.**
**European Operations Patent Department**
**Lennig House**
**2 Mason's Avenue**
**Croydon CR9 3NB (GB)**

## (54) Soil resistant polymers

(57) Soil resistant polymers, and methods for their manufacture are provided. These polymers are aqueous emulsion polymers suitable for use in exterior coatings, such as elastomeric wall coatings, caulks and roof coatings. These polymers exhibit improved dirt-pick up resistance during exterior exposure while maintaining proper adhesion and resistance to cracking.

EP 0 778 296 A1

## Description

The present invention relates to soil resistant polymers. More particularly, the present invention relates to soil resistant emulsion polymers for use in flexible coatings. These polymers are particularly useful in caulks, mastics and other flexible coatings.

"Emulsion polymer" as used herein refers to a water-insoluble polymer which is prepared by emulsion polymerization techniques.

"Glass transition temperature," or "$T_g$," as used herein, means the temperature at or above which a glassy polymer will undergo segmental motion of the polymer chain. Glass transition temperatures of a polymer can be estimated by the Fox equation [Bulletin of American Physics Society 1, 3, page 123 (1956)] as follows:

$$\frac{1}{T_g} = \frac{w_1}{T_{g(1)}} + \frac{w_2}{T_{g(2)}}$$

For a copolymer, $w_1$ and $w_2$ refer to the weight fraction of the two comonomers, and $T_{g(1)}$ and $T_{g(2)}$ refer to the glass transition temperatures of the two corresponding homopolymers. For polymers containing three or more monomers, additional terms are added ($w_n/T_{g(n)}$). The Tg of a polymer can also be measured by various techniques including, for example, differential scanning calorimetry ("DSC"). The particular values of $T_g$ reported hereinafter are estimations based on the Fox equation.

"Dirt pick-up resistance," as used herein, refers to the ability of a coated surface to resist the deposit of foreign matter consisting of dirt, soot, or stain onto a coated substrate. The deposit of foreign matter onto a coated substrate is aesthetically undesirable, and the deposited material may be difficult to remove from the coated substrate. Generally, the harder the coating, the more resistant is the coating to dirt pick-up.

As used herein, acrylate and methacrylate are referred to as "(meth)acrylate," acrylic acid and methacrylic acid are referred to as "(meth)acrylic acid."

Interior paints have long been known which are easy to apply, have minimal odor and are easy to clean. These paints usually have organic polymer present as a latex binding agent which is "hard"; in other words, the polymer has a Tg of more than 0°C. These paints, when applied to exterior surfaces, do not collect dust and provide a satisfactory non-sticky surface. However, they exhibit mediocre adhesiveness to the base substrate and have poor resistance to cracking.

Acrylic paints of the type described above are applied to exterior surfaces of buildings, in order to form an effective coating which protects against rainwater penetration, by virtue of their capacity to cover over cracks or microcracks in the base, both those that exist at the time the paint is applied and those that ultimately may form. An acceptable exterior paint must, therefore, form a film which is able to stretch, shrink and otherwise deform without the appearance of tears (resistance to cracking) or separation (adhesiveness) over a wide range of temperatures. In addition to its role in protecting against inclement weather, the coating is important from an aesthetic standpoint which is assessed based on its dirt pick-up resistance principally resulting from the capture and incrustation of dust on the surface of a coating that is excessively soft and to excessively-high surface adhesion. The resistance of the coating to soiling represents, therefore, another very important criterion to take into account in order to evaluate the quality of exterior acrylic paints.

Acrylic paints have indeed been applied to exterior surfaces in which the organic polymer composing the latex binding agent is of the "soft" type (Tg less than 0°C). Consequently, this paint provides proper adhesiveness and resistance to cracking; however, the dirt pick-up resistance of these paints is unsatisfactory.

Several attempts have been made to overcome the problem of poor dirt pick-up resistance associated with the use of "soft" organic polymer latex binding agents. One attempt has been to incorporate photopolymerizable monomers into the latex binding agent, as taught, for example, in U.S. Patents 5,439,970, 5,162,415 and 4,148,987. These photopolymerizable monomers are relatively expensive and may require special handling due to their intrinsic reactivity.

The present invention seeks to provide an alternative to the known methods of improving the dirt pick-up resistance of organic polymer latex binding agents.

According to a first aspect of the present invention, there is provided an aqueous emulsion polymer comprising, as polymerized units,

(a) from 50 to 99.8 percent by weight of at least one alkyl(meth)acrylate
(b) from 0.2 to 20 percent by weight of a compound of the formula (i)

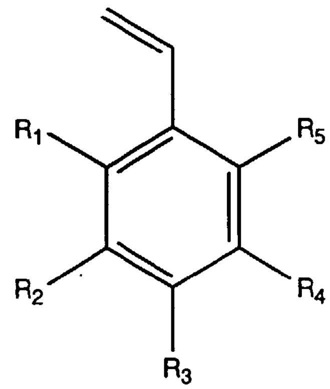

(i)

wherein $R_1$, $R_2$, $R_3$, $R_4$ and $R_5$ are selected from the group consisting of H and $C_1$-$C_4$ alkyl, with the proviso that at least one of $R_1$, $R_2$, $R_3$, $R_4$ and $R_5$ is $C_1$-$C_4$ alkyl

(c) from 0 to 10 percent by weight of at least one a,b-ethylenically unsaturated monobasic or dibasic carboxylic acids or their anhydrides, and

(d) from 0 to 49.8 percent by weight of at least one alpha-beta unsaturated monomer different from (a), (b) and (c) wherein the Tg of the emulsion polymer is less than 0°C.

According to a second aspect of the present invention, there is provided a coating composition comprising the emulsion polymers described above.

According to a third aspect of the present invention, there is provided, in the manufacture of emulsion polymers having a Tg less than 0°C by polymerizing a monomer mixture, the improvement comprising incorporating into said monomer mixture from 0.2 to 20 percent by weight of a compound of formula (i).

According to a fourth aspect of the present invention, there is provided a method of preparing a coating composition comprising admixing the components of the coating composition and at least one aqueous emulsion polymer described above.

Surprisingly, the incorporation of low levels of compounds of formula (i) into the aqueous emulsion polymer imparts the desirable property of dirt pick-up resistance to coatings containing the polymer, whereas styrene does not impart the same benefit.

Suitable alkyl(meth)acrylates include, for example, $C_1$-$C_{20}$ alkyl esters of acrylic acid, $C_1$-$C_{20}$ alkyl esters of methacrylic acid, $C_1$-$C_{20}$ hydroxyalkyl esters of acrylic acid and $C_1$-$C_{20}$ hydroxyalkyl esters of methacrylic acid, and combinations thereof. Preferred alkyl(meth)acrylates include methylacrylate, ethylacrylate, butyl acrylate, ethylhexylacrylate, methylmethacrylate, butylmethacrylate, laurylmethacrylate, hydroxyethylacrylate, hydroxypropylacrylate, hydroxyethylmethacrylate, hydroxypropylmethacrylate and combinations thereof. The polymers of the present invention contain, as polymerized units, alkyl(meth)acrylates at a level of from 50 to 99.8 percent by weight based on the total monomer weight, preferably from 70 to 99.5 percent by weight, most preferably from 80 to 99 percent by weight.

The polymers of the present invention also contain, as polymerized units, compounds of formula (i) at a level of from 0.2 to 20 percent by weight based on the total monomer weight, preferably from 0.5 to 15 percent by weight, most preferably from 1 to 10 percent by weight. Preferred compounds of formula (i) are those wherein at least one of $R_1$, $R_2$, $R_3$, $R_4$ and $R_5$ is $C_1$-$C_2$ alkyl. Suitable compounds of formula (i) include methylstyrene, ethylstyrene, dimethylstyrene, diethylstyrene and trimethylstyrene. The more preferred compounds of formula (i) are those wherein only one of $R_1$, $R_2$, $R_3$, $R_4$ and $R_5$ are methyl, and the remainder are hydrogen; such a compound is referred to as "methylstyrene." Thus, "methylstyrene", as used herein, does not refer to either a-methylstyrene or b-methylstyrene which have the methyl substituent attached to the vinyl group. Methylstyrene suitable for use in the present invention may be a single isomer, or a mixture of more than one isomer. Methylstyrene is often made available as "vinyltoluene" as a mixture of isomers.

Optionally, the polymers of the present invention contain, as polymerized units, at least one a,b-ethylenically unsaturated monobasic or dibasic carboxylic acids or their anhydrides. Suitable a,b-ethylenically unsaturated monobasic or dibasic carboxylic acids or their anhydrides include, for example, acrylic acid, methacrylic acid, crotonic acid, vinylacetic acid, acryloxypropionic acid, maleic acid, maleic anhydride, itaconic acid, mesaconic acid, fumaric acid, citraconic acid and combinations thereof. The a,b-ethylenically unsaturated monobasic or dibasic carboxylic acids may be used in the acid form, neutralized form or a combination thereof. Additionally, the a,b-ethylenically unsaturated monobasic or dibasic carboxylic acids or anhydrides may be neutralized after the polymerization with any suitable base or combination of bases. If used, the at least one a,b-ethylenically unsaturated monobasic or dibasic carboxylic acids or

their anhydrides are present in the polymers, as polymerized units, at a level of up to 10 percent by weight based on the total monomer weight, preferably from 0.1 to 5 percent by weight, most preferably from 0.5 to 3 percent by weight.

Optionally, the polymers of the present invention contain, as polymerized units, at least one a,b-ethylenically unsaturated monomer different from the alkyl(meth)acrylates, methylstyrene and carboxylic monomers described above. Suitable optional monomers include, for example, acrylamide, methacrylamide, N-tertiarybutylacrylamide, N-methylacrylamide, N,N-dimethylacrylamide, acrylonitrile, methacrylonitrile, allyl alcohol, allylsulfonic acid, allylphosphonic acid, vinylphosphonic acid, dimethylaminoethyl acrylate, dimethylaminoethylmethacrylate, phosphoethyl methacrylate, N-vinylpyrrolidone, N-vinylformamide, N-vinylimidazole, vinyl acetate, styrene, styrenesulfonic acid and its salts, vinylsulfonic acid and its salts, and 2-acrylamido-2-methylpropanesulfonic acid and its salts, crosslinking monomers, photopolymerizable monomers, ureido-functional monomers, and combinations thereof. Suitable ureido-functional monomers are taught, for example, in United States Patent 4,599,417. Suitable photopolymerizable monomers include ethylenically unsaturated benzophenone and acetophenone derivatives as taught, for example, in United States Patents 5,439,970, 5,162,415 and 3,429,852. If used, these a,b-ethylenically unsaturated monomers are present in the polymers, as polymerized units, at a level of up to 49.8 percent by weight based on the total monomer weight, preferably from 0.5 to 45 percent by weight.

The monomers which make up the polymers of the present invention are selected, in part, so that the Tg of the resulting polymer is less than 0°C, preferably less than -15°C, most preferably less than -30°C.

The polymers of the present invention are aqueous emulsion polymers prepared by any conventional aqueous emulsion polymerization technique. Such techniques are well known to those of ordinary skill in the art of emulsion polymerization. The polymers may, for example, be prepared from a seed; they may be single stage or multiple stage; they may have a core-shell morphology. The selection of the type and level of initiators, surfactants, protective colloids, chain regulators and the like is within the ordinary skill of the artisan. Similarly, the process conditions such as temperature, rates of monomer addition, mixing, and the like, are also within the ordinary skill of the artisan.

When the polymers of the present invention are intended for use as a caulk, it is preferred that the level of polymer solids in the emulsion be as high as possible. High solids emulsions can be obtained by a number of techniques including high solids polymerization, multimodal polymerization and blending of high solids polymer or dry polymer into a polymer emulsion. Preferably, the level of polymer solids in the emulsion is in the range of from 40 to 70 percent by weight of the emulsion, more preferably from 45 to 65 percent by weight, most preferably from 55 to 62 percent by weight. The preferred average particle size of the polymers used for a caulk, as measured by a BI-90 particle sizer, is in the range of from 200 to 400 nanometers whether the polymer is unimodal or the average of more than one mode.

The polymers of the present invention are useful in coatings, renderings and sealants. The polymers are particularly useful in exterior coatings such as elastomeric wall coatings, caulks and roof coatings.

Coating compositions containing the polymers of the present invention may contain any of the conventional components of such compositions, such as other polymers, fillers, extenders, pigments, aggregates, defoaming agents, biocides, dispersants, chelating agents, coalescents, surfactants, water, pH buffering agents, dyes, thickeners, leveling agents, wetting agents, plasticizers, cosolvents, optical brighteners and the like. The coating compositions may, for example, be clear coating compositions or pigmented coating compositions. Clear coating compositions of the present invention generally contain the polymers of the present invention at a level of at least 90 percent by weight in combination with at least one thickener, at least one defoamer and optionally other ingredients. Pigmented coating compositions of the present invention generally contain the polymers of the present invention in combination with at least one pigment at a level which provides a pigment volume concentration of 10 to 50 percent and a polymer volume contration of 90 to 50 percent, in addition to at least one thickener, at least one dispersant and optionally other ingredients.

Exposure Test Method

The dirt pick-up resistance was evaluated by measuring the initial 45°/0° reflectance of the compositions described below after they have dried for several days at room temperature. The compositions were then exposed outdoors, face-up, in an industrial area of Philadelphia, Pennsylvania. Periodic measurements of the 45°/0° reflectance were made. The percent reflectance retained reported in the tables below is the amount of reflectance, at the periodic measurement, relative to the initial measurement.

Polymer 1 Preparation

Into a 5 liter round bottom flask equipped with a stirrer, temperature control and condenser was added 864 grams of deionized water. The contents of the flask were heated to 85°C while stirring under a nitrogen atmosphere. 1.2 grams of sodium carbonate, 8.0 grams of sodium persulfate and 161.8 grams of a 45 percent by weight aqueous emulsion of preformed acrylic emulsion polymer having a particle size of about 100 nanometers was added to the flask. An initiator solution was prepared by dissolving 2.7 grams of sodium persulfate in 180 grams of deionized water. A monomer

emulsion ("ME-1") was prepared by mixing 620.0 grams of deionized water, 2077.4 grams of butyl acrylate, 195.9 grams of methyl methacrylate, 48.9 grams of methylstyrene, 40.3 grams of methacrylic acid and 10.6 grams of anionic surfactant (SIPONATE® DS-4; SIPONATE is a trademark of Rhone-Poulenc). The initiator solution and ME-1 were added to the flask separately and linearly over 180 minutes while maintaining the contents of the flask at a temperature of 80-82°C. When 40 percent of ME-1 had been added, 81.5 grams of a 30 percent by weight solution of ureidomethacrylate in methyl methacrylate was added to the remaining ME-1. After the remaining ME-1/ureido monomer solution was completely added, the contents of the flask were maintained at 80-82°C for an additional 30 minute while 31 grams of deionized water are added through the ME-1 container as a rinse. A neutralizer solution of 1.7 grams ammonium hydroxide dissolved in 7.1 grams of water was added to the flask. The contents of the flask were cooled to about 65°C, additional initiator was added to reduce the level of residual monomer, and another neutralizer solution of 15.3 grams of ammonium hydroxide dissolved in 15 grams of deionized water was added. The contents of the flask were diluted with deionized water to produce a final latex of 55.3 percent by weight polymer solids at a pH of 9.0 having a Tg of -41°C.

Comparative Polymers A and B were prepared in a similar manner as Polymer 1, but either eliminating the methylstyrene (Comparative Polymer A) or replacing the methylstyrene with styrene (Comparative Polymer B). Comparative polymers A and B had a Tg of -41°C. The monomer composition of Polymer 1, and Comparative Polymers A and B are reported as percent by weight of the total monomers in Table 1, below.

TABLE 1

| Monomer | Polymer 1 | Comparative Polymer A | Comparative Polymer B |
|---|---|---|---|
| Butyl acrylate | 85 | 85 | 85 |
| Methyl methacrylate | 10.4 | 12.4 | 10.4 |
| methacrylic acid | 1.6 | 1.6 | 1.6 |
| ureido-functional monomer | 1 | 1 | 1 |
| methylstyrene | 2 | -- | -- |
| styrene | -- | -- | 2 |

The polymers were then incorporated into a coating formulation by grinding mixture I for 15-20 minutes and then admixing mixture II, where mixtures I and II have the formulations set forth in Table 2, below.

TABLE 2

| **Mixture I** | **Grams** |
|---|---|
| Water | 153 |
| Dispersant | 4.8 |
| defoamer | 1.9 |
| Potassium tripolyphosphate | 1.4 |
| Titanium dioxide | 70.4 |
| Calcium carbonate | 422.5 |
| Zinc oxide | 47.0 |
| Ethylene Glycol | 24.4 |
| Hydroxyethylcellulose (Natrosol 250 MXR) | 4.2 |
| | |
| **Mixture II** | |
| Polymer (55% solids) | 471 |
| Coalescent | 7.0 |
| Defoamer | 1.9 |
| Biocide | 2.1 |
| Ammonium hydroxide (28%) | 4 |

0.0508 centimeter (20 mil) wet films of the formulated polymers were prepared by drawing down with a Gardner knife, and the films were exposed according to the method described above. The data for the percent reflectance retained appear in Table 3, below.

0.1016 centimeter (40 mil) wet films of the formulated polymers were prepared by drawing down with a Gardner knife, and the films were exposed according to the method described above. The data appear in Table 4, below.

TABLE 3

| Exposure Time (months) | Polymer 1 | Comparative Polymer A | Comparative Polymer B |
|---|---|---|---|
| 0 | 100 | 100 | 100 |
| 18 | 50.5 | 44.8 | 43.7 |
| 24 | 49.6 | 44.7 | 44.2 |
| 36 | 51.5 | 47.4 | 47.4 |
| 48 | 54.9 | 58.8 | 49.0 |
| 60 | 61.0 | 55.8 | 56.7 |

TABLE 4

| | PERCENT REFLECTANCE RETAINED | | |
|---|---|---|---|
| Exposure Time (months) | Polymer 1 | Comparative Polymer A | Comparative Polymer B |
| 0 | 100 | 100 | 100 |
| 18 | 49.0 | 41.4 | 40.6 |
| 24 | 48.5 | 41.4 | 42.9 |
| 36 | 51.0 | 44.5 | 46.2 |
| 48 | 53.7 | 46.2 | 48.1 |
| 60 | 61.2 | 54.4 | 55.5 |

The data in Tables 3 and 4 show that compositions prepared with polymer containing methylstyrene had better dirt pick-up resistance, as indicated by the higher percent reflectance retained, compared to compositions prepared with polymer which did not contain methylstyrene.

Formulations of polymer 1 and comparative polymers A and B were prepared as in Table 2 except mixture B also contained 0.3 percent by weight, based on polymer solids, of benzophenone.

0.0508 centimeter (20 mil) wet films of the formulated polymers were prepared by drawing down with a Gardner knife, and the films were exposed according to the method described above. The data appear in Table 5, below.

0.1016 centimeter (40 mil) wet films of the formulated polymers were prepared by drawing down with a Gardner knife, and the films were exposed according to the method described above. The data appear in Table 6, below.

TABLE 5

| | PERCENT REFLECTANCE RETAINED | | |
|---|---|---|---|
| Exposure Time (months) | Polymer 1 | Comparative Polymer A | Comparative Polymer B |
| 0 | 100 | 100 | 100 |
| 18 | 60.0 | 57.7 | 55.8 |
| 24 | 55.3 | 51.8 | 52.1 |
| 36 | 54.1 | 47.7 | 49.2 |
| 48 | 54.2 | 47.6 | 50.8 |
| 60 | 60.8 | 54.9 | 57.8 |

TABLE 6

| | PERCENT REFLECTANCE RETAINED | | |
|---|---|---|---|
| **Exposure Time (months)** | **Polymer 1** | **Comparative Polymer A** | **Comparative Polymer B** |
| 0 | 100 | 100 | 100 |
| 18 | 67.1 | 63.8 | 62,6 |
| 24 | 62.2 | 58.7 | 58.0 |
| 36 | 53.8 | 49.5 | 49.1 |
| 48 | 52.2 | 47.8 | 49.4 |
| 60 | 59.2 | 53.8 | 55.9 |

The data in Tables 5 and 6 show that compositions prepared with polymer containing methylstyrene had better dirt pick-up resistance, as indicated by the higher percent reflectance retained, compared to compositions prepared with polymer which did not contain methylstyrene.

Polymers 2 and 3 and Comparative Polymer C were prepared by a bimodal two stage emulsion polymerization process of monomer emulsion 1 ("ME-1") and monomer emulsion 2 ("ME-2") using the types and amounts of monomers set forth in Table 7 below. Polymers 2 and 3 and Comparative Polymer C had a final polymer solids level of 60-62 percent by weight and Tg of -44°C, -41°C and - 46°C respectively. The amounts of monomers in Table 7 below are reported as parts by weight.

TABLE 7

| | | Polymer 2 | Polymer 3 | Comparative C |
|---|---|---|---|---|
| **ME-1** | | | | |
| | Butyl acrylate | 89.7 | 86.6 | 91.6 |
| | Acrylonitrile | 7 | 7 | 7 |
| | Acrylic Acid | 1.4 | 1.4 | 1.4 |
| | methylstyrene | 1.9 | 5.0 | -- |
| **ME-2** | | | | |
| | Butylene glycol dimethacrylate | 100 | 100 | 100 |
| | | | | |
| **Ratio ME-1:ME-2** | | 98.5:1.5 | 98.5:1.5 | 98.5:1.5 |

Three caulk formulations, using Polymer 2, Polymer 3 and Comparative Polymer C, respectively, were prepared by mixing components I for 75 minutes and then admixing component II, mixing for 10 minutes, admixing component III and mixing for five minutes where components I, II and III are set forth in Table 8, below.

TABLE 8

| Components I | Grams |
|---|---|
| Polymer (63% solids) | 387 |
| Biocode (1.5% solids) | 1.3 |
| Surfactant | 10.0 |
| Ethylene Glycol | 7.5 |
| Hydroxyethyl cellulose (Natrosol 250 MXR) | 3.8 |
| Potassium tripolyphosphate | 1.3 |
| Dispersant | 1.5 |
| Calcium carbonate | 727 |

TABLE 8 (continued)

| Components I | Grams |
|---|---|
| Titanium dioxide | 16.1 |
| | |
| Components II | |
| Polymer (63% solids) | 129 |
| Mineral Spirits (Varsol #1) | 29.3 |
| | |
| Components III | |
| Defoamer | 1.1 |

Test specimens of caulks prepared with Polymers 2, 3 and Comparative C were prepared using a 10.2 centimeter by 25.4 centimeter (4 inch by 10 inch) templates with teflon-coated aluminum panels according to the Standard Test Method for Low Temperature Flexibility of Latex Sealants step 8 described in ASTM C 734-93. The data appear in Table 9, below.

TABLE 9

| | PERCENT REFLECTANCE RETAINED | | |
|---|---|---|---|
| Exposure Time (months) | Polymer 2 | Polymer 3 | Comparative Polymer C |
| 0 | 100 | 100 | 100 |
| 1 | 83.3 | 85.9 | 79.8 |
| 2 | 75.7 | 79.6 | 72.5 |
| 3 | 63.4 | 73.2 | 58.7 |
| 6 | 54.2 | 67.1 | 46.2 |
| 9 | 46.1 | 58.2 | 38.6 |
| 12 | 45.9 | 60.4 | 38.3 |

The data in Table 9 show that compositions prepared with polymers containing methylstyrene had better dirt pick-up resistance, as indicated by the higher percent reflectance retained, compared to compositions prepared with polymer which did not contain methylstyrene.

Coating formulations as described in Table 2, above, were made using Polymers 2, 3 and Comparative Polymer C. Films of these coating formulations were prepared in such a way as to provide a dry film thickness of 0.01016 centimeters (4 mils), 0.0203 centimeters (8 mils) or 0.0635 centimeters (25 mils). These films were then exposed in the manner described above for 3 and 5 months. The data appear in Table 10 below.

TABLE 10

| | PERCENT REFLECTANCE RETAINED | | |
|---|---|---|---|
| Dry Film Thickness (mils) | Polymer 2 3 months/5 months | Polymer 3 3 months/5 months | Comparative Polymer C 3 months/5 months |
| 4 | 70.0/66.4 | not measured | 66.2/61.2 |
| 8 | 66.9/60.9 | not measured | 66.0/60.0 |
| 25 | 65.8/57.5 | 70.1/66.3 | 64.7/57.4 |

The data in Table 10 show that compositions prepared with polymer containing methylstyrene had better dirt pick-up resistance, as indicated by the higher percent reflectance retained, compared to compositions prepared with polymer which did not contain methylstyrene.

Polymers 4 and 5 were prepared by single stage emulsion polymerization of a monomer mixture as described in

Table 11, below. The Tg of Polymers 4 and 5 were -39°C and -40°C, respectively. The monomer level is reported as percent by weight of the total monomers. The monomer composition of Comparative Polymer A is also shown for comparison.

TABLE 11

| Monomer Level | Polymer 4 | Polymer 5 | Comparative Polymer A |
|---|---|---|---|
| Butyl acrylate | 85 | 85 | 85 |
| Methyl methacrylate | 10.4 | 7.4 | 12.4 |
| methacrylic acid | 1.6 | 1.6 | 1.6 |
| ureido-functional monomer | 1 | 1 | 1 |
| methylstyrene | 1.9 | 5 | -- |
| styrene | -- | | -- |

Coating formulations as described in Table 2, above, were made using Polymers 4, 5 and Comparative Polymer A. Films of these coating formulations were prepared in such a way as to provide a dry film thickness of 0.01524 centimeters (6 mils). These films were then exposed in the manner described above for 3 months and 5 months. The data appear in Table 12 below.

TABLE 12

| PERCENT REFLECTANCE RETAINED | | |
|---|---|---|
| Polymer 4<br>3 months/5 months | Polymer 5<br>3 months/5 months | Comparative Polymer A<br>3 months/5 months |
| 76.4/70.6 | 82.1/78.7 | 67.7/61.4 |

The data in Table 12 show that compositions prepared with polymer containing methylstyrene had better dirt pick-up resistance, as indicated by the higher percent reflectance retained, compared to compositions prepared with polymer which did not contain methylstyrene.

Polymer 6 and Comparative Polymer D were prepared by single stage emulsion polymerization of a monomer mixture as described in Table 13, below. Polymer 6 and Comparative Polymer D had a Tg of -44°C and -46°C respectively. The monomer level is reported as percent by weight of the total monomers.

TABLE 13

| | Polymer 6 | Comparative D |
|---|---|---|
| Butyl acrylate | 89.7 | 91.6 |
| Acrylonitrile | 7 | 7 |
| Acrylic Acid | 1.4 | 1.4 |
| methylstyrene | 1.9 | |

Coating formulations as described in Table 2, above, were made using Polymer 6 and Comparative Polymer D. Films of these coating formulations were prepared in such a way as to provide a dry film thickness of 0.0203 centimeters (8 mils). These films were then exposed in the manner described above for 3 months and 5 months. The data appear in Table 14 below.

TABLE 14

| PERCENT REFLECTANCE RETAINED | |
|---|---|
| Polymer 6<br>3 months/5 months | Comparative Polymer D<br>3 months/5 months |
| 73.5/59.2 | 73.5/54.9 |

The data in Table 14 show that compositions prepared with polymer containing methylstyrene had better dirt pick-up resistance, as indicated by the higher percent reflectance retained, compared to compositions prepared with polymer which did not contain methylstyrene.

## Claims

1. An aqueous emulsion polymer comprising, as polymerized units,

(a) from 50 to 99.8 percent by weight of at least one alkyl(meth)acrylate

(b) from 0.2 to 20 percent by weight of a compound of the formula (i)

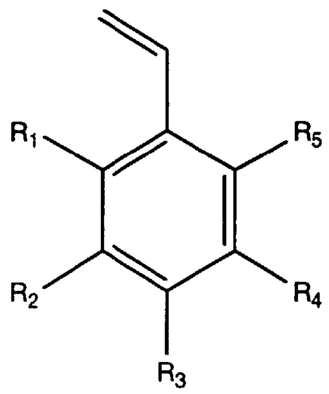

(i)

wherein $R_1$, $R_2$, $R_3$, $R_4$ and $R_5$ are selected from the group consisting of H and $C_1$-$C_4$ alkyl, with the proviso that at least one of $R_1$, $R_2$, $R_3$, $R_4$ and $R_5$ is $C_1$-$C_4$ alkyl

(c) from 0 to 10 percent by weight of at least one a,b-ethylenically unsaturated monobasic or dibasic carboxylic acids or their anhydrides, and

(d) from 0 to 49.8 percent by weight of at least one alpha-beta unsaturated monomer different from (a), (b) and (c)

wherein the Tg of the emulsion polymer is less than 0°C.

2. A coating composition comprising aqueous emulsion polymer comprising, as polymerized units,

(a) from 50 to 99.8 percent by weight of at least one alkyl(meth)acrylate

(b) from 0.2 to 20 percent by weight of a compound of the formula (i)

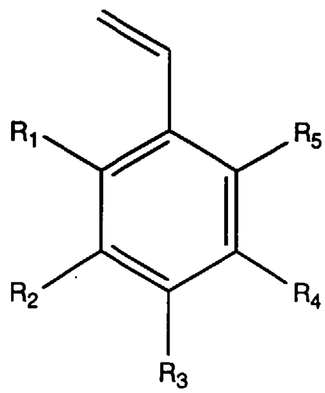

(i)

wherein $R_1$, $R_2$, $R_3$, $R_4$ and $R_5$ are selected from the group consisting of H and $C_1$-$C_4$ alkyl, with the proviso that at least one of $R_1$, $R_2$, $R_3$, $R_4$ and $R_5$ is $C_1$-$C_4$ alkyl

(c) from 0 to 10 percent by weight of at least one a,b-ethylenically unsaturated monobasic or dibasic carboxylic acids or their anhydrides, and

(d) from 0 to 49.8 percent by weight of at least one alpha-beta unsaturated monomer different from (a), (b) and (c)

wherein the Tg of the emulsion polymer is less than 0°C.

**3.** In the manufacture of emulsion polymers having a Tg less than 0°C by polymerizing a monomer mixture, the improvement comprising incorporating into said monomer mixture from 0.2 to 20 percent by weight of a compound of the formula (i)

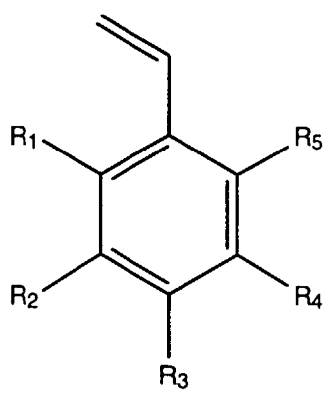

(i)

wherein $R_1$, $R_2$, $R_3$, $R_4$ and $R_5$ are selected from the group consisting of H and $C_1$-$C_4$ alkyl, with the proviso that at least one of $R_1$, $R_2$, $R_3$, $R_4$ and $R_5$ is $C_1$-$C_4$ alkyl.

**4.** A method of preparing a coating composition comprising admixing the components of the coating composition and at least one aqueous emulsion polymer comprising, as polymerized units,

(a) from 50 to 99.8 percent by weight of at least one alkyl(meth)acrylate

(b) from 0.2 to 20 percent by weight of a compound of the formula (i)

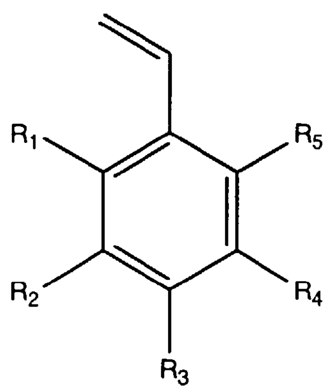

(i)

wherein $R_1$, $R_2$, $R_3$, $R_4$ and $R_5$ are selected from the group consisting of H and $C_1$-$C_4$ alkyl, with the proviso that at least one of $R_1$, $R_2$, $R_3$, $R_4$ and $R_5$ is $C_1$-$C_4$ alkyl

(c) from 0 to 10 percent by weight of at least one a,b-ethylenically unsaturated monobasic or dibasic carboxylic acids or their anhydrides, and

(d) from 0 to 49.8 percent by weight of at least one alpha-beta unsaturated monomer different from (a), (b) and (c)

wherein the Tg of the emulsion polymer is less than 0°C.

European Patent Office

# EUROPEAN SEARCH REPORT

Application Number
EP 96 30 8608

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | GB 956 799 A (ROHM & HAAS CO.)<br>--- | | C08F220/12<br>C09D133/06 |
| D,A | US 5 439 970 A (R. REEB)<br>----- | | |
| | | | TECHNICAL FIELDS SEARCHED (Int.Cl.6) |
| | | | C08F |

The present search report has been drawn up for all claims

| Place of search | Date of completion of the search | Examiner |
|---|---|---|
| THE HAGUE | 4 April 1997 | Cauwenberg, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)